# EUROPÄISCHE PATENTSCHRIFT

(11) **EP 0 458 800 B1**
(45) Veröffentlichungstag und Bekanntmachung des Hinweises auf die Patenterteilung: **08.06.1994**
(21) Anmeldenummer: 90902064.6
(22) Anmeldetag: 23.12.1989
(51) Int. Cl.: B60T 8/24

(54) **SCHALTUNGSANORDNUNG FÜR EINE BREMSANLAGE MIT BLOCKIERSCHUTZ- UND/ODER ANTRIEBSSCHLUPFREGELUNG**
CIRCUIT ARRANGEMENT FOR A BRAKE SYSTEM WITH ANTILOCK AND/OR TRACTION SLIP CONTROL
CIRCUIT POUR SYSTEME DE FREINS A ANTI-DERAPEUR ET/OU REGULATEUR DE PATINAGE A L'ENTRAINEMENT

(30) Priorität: 18.02.1989 DE 3905045
(43) Veröffentlichungstag der Anmeldung: 04.12.1991
(73) Patentinhaber: ITT Automotive Europe GmbH, 60488 Frankfurt (DE)
(72) Erfinder: FENNEL, Helmut, D-6232 Bad Soden (DE); WUPPER, Hans, D-6382 Friedrichsdorf (DE); BATISTIC, Ivica, D-6000 Frankfurt/Main 60 (DE); BÜTTNER, Hans-Joachim, D-6331 Hohenahr-Erdar (DE)
(86) Internationale Anmeldenummer: EP8901607
(87) Internationale Veröffentlichungsnummer: WO9009301

(56) Entgegenhaltungen:
- EP-A- 274 397
- EP-A- 293 561
- WO-A-89/04782
- FR-A- 2 509 242

## Beschreibung

Die Erfindung bezieht sich auf eine Schaltungsanordnung für eine Bremsanlage mit Blockierschutz- und/oder Antriebsschlupfregelung, mit Radsensoren zur Erzeugung von elektrischen Signalen, die das Raddrehverhalten wiedergeben, mit Schaltkreisen zur Bildung einer Fahrzeugreferenzgeschwindigkeit, zur Auswahl von Sensorsignalen, zur Kurvenerkennung und zur Erzeugung von Bremsdrucksteuersignalen, wobei in einem ersten Schritt das Drehverhalten der Räder jeder Fahrzeugseite separat ermittelt wird und in einem zweiten Schritt die seitenbezogenen Meßwerte verglichen werden.

Es ist bereits bekannt, eine ähnliche Schaltungsanordnung für blockiergeschützte Bremsanlagen mit Schaltkreisen zur Kurvenfahrterkennung auszurüsten. Nach der DE-Offenlegungsschrift 34 13 738 wird mit Radsensoren das Raddrehverhalten gemessen, durch Vergleich der Meßwerte mit einer Fahrzeugreferenzgeschwindigkeit der Schlupf ermittelt und für jede Fahrzeugseite individuell die Schlupfsumme gebildet. Schließlich wird die Differenz der Schlupfsummen beider Fahrzeugseiten ermittelt, und es werden die Auswahlkriterien (Select-low etc.), nach denen sich der Einfluß der einzelnen Räder auf die Regelung richtet, geändert, wenn die Differenz der Schlupfsummen einen Grenzwert überschreitet. Auf diese Weise wird die Regelung dem unterschiedlichen Fahrzeugverhalten bei Geradeausfahrt und bei Kurvenfahrt angepaßt.

Nach der DE-Offenlegungsschrift 21 19 590 ist ein Antiblockierregelsystem bekannt, bei dem zur Kurvenerkennung die Querbeschleunigung des Fahrzeuges z.B. mit einem Quecksilberschalter gemessen wird. Bei diesem System werden im Normalfall die Räder einer Achse nach Select-high geregelt, nach Kurvenerkennung erfolgt Umschaltung auf Select-low.

Aus der EP-A-293561 ist eine Schaltungsanordnung für eine Bremsanlage mit Blockierschutz- und Antriebsschlupfregelung bekannt, mit der zur Kurvenerkennung die Differenzgeschwindigkeit zwischen den Rädern einer Fahrzeugachse gemessen wird. Außerdem wird mit Hilfe eines Tiefpasses großer Zeitkonstante ein von der momentanen Kurvenfahrt unabhängiges Fehlersignal ermittelt. Aus der Differenz zwischen dem Fehlersignal und dem Differenzgeschwindigkeitssignal wird schließlich das Kurvenfahrtsignal gewonnen.

Ferner gibt es auch schon Systeme, die zur Kurvenerkennung einen Lenkwinkelgeber in Form eines Schalters verwenden, der bei Lenkeinschlag mechanisch betätigt wird. Mit dem Ausgangssignal dieses Gebers wird dann die Blockierschutzregelung dem geänderten Fahrzeugverhalten in der Kurve angepaßt.

Der Erfindung liegt nun die Aufgabe zugrunde, eine Schaltungsanordnung zu entwickeln, die ebenfalls allein aus den Informationen der ohnehin vorhandenen Radsensoren ein Kurvenerkennungssignal ableitet und die eine feinfühlige Anpassung der Regelung an unterschiedliche Fahr- und Fahrbahnsituationen ermöglicht.

Es hat sich gezeigt, daß diese Aufgabe mit einer Schaltungsanordnung der eingangs genannten Art gelöst werden kann, deren Besonderheit darin besteht, daß diese Auswahlschaltkreise besitzt, mit denen in dem ersten Schritt durch Vergleich und Bewertung der Radgeschwindigkeiten für jede Fahrzeugseite eine Seitenreferenzgeschwindigkeit gebildet wird und mit denen zur Bildung der Seitenreferenzgeschwindigkeiten nach vorgegebenen Auswahl- und Bewertungskriterien jeweils die führende Radgeschwindigkeit abgeleitet wird, wobei außerhalb der Regelung, d.h. solange keine Regelung stattfindet, grundsätzlich das langsamere, während der Regelung grundsätzlich das schnellere Fahrzeugrad als führendes Rad zur Bildung der Seitenreferenzgeschwindigkeit dient, daß in den zweiten Schritt aus beiden Seitenreferenzgeschwindigkeiten ein Differenzsignal generiert wird, welches nach Verknüpfung mit der Fahrzeugreferenzgeschwindigkeit zur Kurvenerkennung und/oder zur Anpassung der Regelung an
das Fahrzeugverhalten während einer Kurvenfahrt, d.h. an die Radbelastungsänderungen, den Lenkwinkel und dgl., ausgewertet wird.

Es werden also keine zusätzlichen Sensoren benötigt. Die benötigten Informationen über die Kurvenfahrt werden aus dem unterschiedlichen Drehverhalten der kurveninneren und kurvenäußeren Räder abgeleitet. Es entsteht ein Kurvenerkennungssignal, mit dem sich die Regelung feinstufig an unterschiedliche Gegebenheiten anpassen läßt.

Nach einer vorteilhaften Ausführungsart der Erfindung sind Tiefpaß-Filterstufen mit veränderlicher Filterzeitkonstanten vorhanden, wobei die führende Radgeschwindigkeit jeweils einer der Tiefpaß-Filterstufen zugeführt wird und die Filterzeitkontante in Abhängigkeit vom momentanen Reibwert oder einer entsprechenden Meßgröße derart geändert wird, daß mit abnehmendem Reibwert die Filterzeitkontante kontinuierlich oder in Stufen zunimmt. Zweckmäßig verhält sich die Filterzeitkonstante, die bei Hochreibwert gilt, zur Zeitkonstanten bei mittlerem Reibwert und zur Zeitkonstanten bei niedrigem Reibwert etwa wie 1:2:4. In anderen Fällen erhöht sich die Filterzeitkonstante bei Niedrigreibwert bezogen auf den Hochreibwert um das 3- bis 10fache.

Eine weitere Ausführungsart der Erfindung besteht darin, daß das aus beiden Seitenreferenzgeschwindigkeiten gebildete Differenzsignal durch einen zuschaltbaren Gegenkopplungskreis modifiziert wird, der bei "normalem", typischem Radddrehverhalten während einer Regelbremsung eingeschaltet ist und dadurch das Differenzsignal reduziert und der bei indifferentem, atypischem Raddrehverhalten abgeschaltet wird oder das Differenzsignal nur geringfügig beeinflußt. In diesem letztgenannten Fall, d.h. bei atypischem Raddrehverhalten, ist daher der Einfluß auf die Regelungsschwellen und damit z. B. die Verringerung der Regelempfindlichkeit in der Kurve hoch.

Ferner ist es nach der Erfindung vorgesehen, zur Anpassung der Regelung ein Stellsignal durch Division des Differenzsignals durch die Fahrzeugreferenzgeschwindigkeit abzuleiten und einer Anpassungsschaltung zuzuführen, die Regelungsschwellen kontinuierlich oder in Stufen proportional zu oder in Abhängigkeit von der Größe des Stellsignals erhöht bzw. die Empfindlichkeit der Regelung verringert. Dabei sind in Abhängigkeit von dem Stellsignal die Schlupfschwellen der Regelung und/oder die Verzögerungs- und/oder Beschleunigungsschwellen und/oder Abschaltschwellen für eine Giermomentenbegrenzung oder dgl. veränderbar.

Bei der Auswahl des führenden Rades dient zweckmäßigerweise außerhalb der Regelung, d.h. solange keine Regelung stattfindet, grundsätzlich das langsamere, während der Regelung grundsätzlich das schnellere Fahrzeugrad als führendes Rad für die Bildung der jeweiligen Seitenreferenzgeschwindigkeit. Während einer Regelung geht jedoch nach einem Ausführungsbeispiel die Führung der Seitenreferenzgeschwindigkeit von dem schnelleren auf das langsamere Rad über, sobald die Geschwindigkeit des führenden Rades über die Fahrzeugreferenzgeschwindigkeit hinaus ansteigt; es handelt sich also um den Fall des Überdrehens, bei dem ein Rad, z.B. ein angetriebenes Rad, durch den Einfluß des Antriebsmotors, gewissermaßen schneller wird als das Fahrzeug.

Ferner besteht eine Ausführungsart der Erfindung noch darin, daß die Filterstufe, der das Geschwindigkeitssignal des führenden Rades zugeführt wird, auf Abnahme der führenden Radgeschwindigkeit reagiert, ansteigende Geschwindigkeitssignale dagegen nicht beeinflußt. Die Filterung wirkt also nur in einer Richtung.

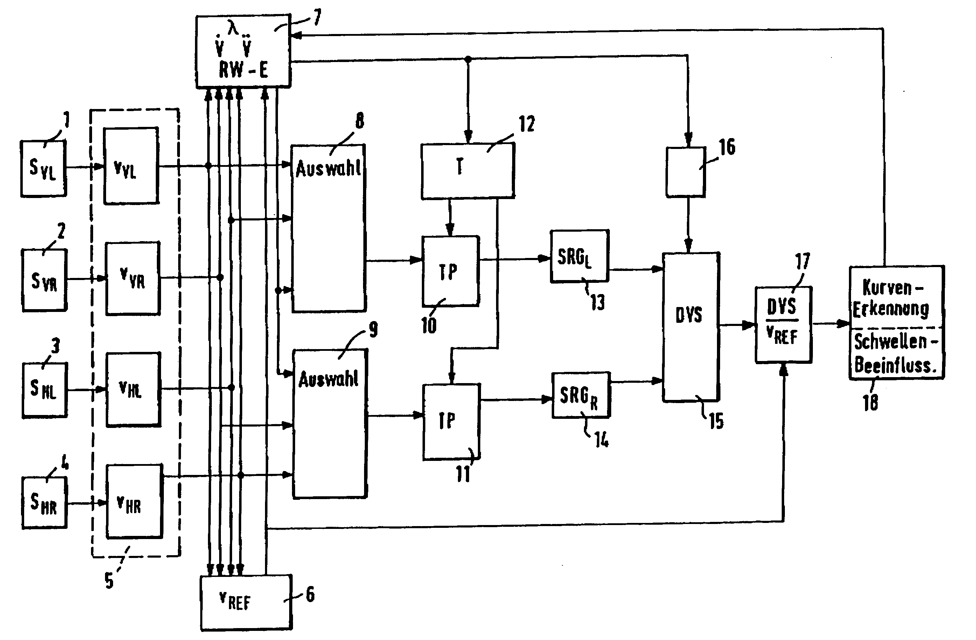

Weitere Merkmale, Vorteile und Anwendungsmöglichkeiten der Erfindung gehen aus der folgenden Beschreibung eines Ausführungsbeispieles anhand der beigefügten Abbildung hervor, die in Blockdarstellung den Aufbau und die Wirkungsweise einer Schaltungsanordnung nach der Erfindung wiedergibt.

Die zu verarbeitenden Signale werden mit Hilfe von radindividuellen Sensoren 1 bis 4 gewonnen, deren Ausgangssignale das Drehverhalten der einzelnen Räder - die Indices VL und VR beziehen sich auf das linke und rechte Vorderrad, die Indices HL und HR auf das linke und rechte Hinterrad - wiedergeben. In einem Schaltkreis 5 werden die Sensorsignale aufbereitet und die Geschwindigkeitssignale v_{VL'}, v_{VR}, v_{HL}, und v_{HR} gewonnen.

Aus den einzelnen Geschwindigkeitssignalen wird durch logische Verknüpfung nach vorgegebenen Kriterien in einem Schaltblock 6 die sogenannte Fahrzeugreferenzgeschwindigkeit v_{REF} gebildet. In einer Auswerteschaltung 7 werden aus den Geschwindigkeitssignalen radindividuell die Verzögerungs- und Beschleunigungssignale v̇, der Ruck 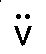 und unter Zuhilfenahme der Fahrzeugreferenzgeschwindigkeit v_{REF} der momentane Schlupf jedes Rades ermittelt. Eine sogenannte Reibwert - Erkennung (RW-E), die z. B. aus der Dauer des Druckabbaues oder aus der Verzögerung eines stabil laufenden Rades zum Zeitpunkt des Auftretens einer Blockiertendenz auf den herrschenden Reibwert schließt, ist ebenfalls in der Auswerteschaltung 7 untergebracht.

Die Geschwindigkeitssignale v_{VR}, v_{HR}; v_{VL}, v_{HL} der beiden Räder einer Fahrzeugseite werden außerdem jeweils einer Auswahlschaltung 8,9 zugeführt, die nach vorgegebenen Kriterien die führende Radgeschwindigkeit für die jeweilige Fahrzeugseite auswählt. Die Information über das Einsetzen der Regelung, die zur Bestimmung des führenden Rades notwendig ist, wird über eine von der Auswerteschaltung 7 zu den Schaltungen 8 und 9 führende Signalleitung übertragen.

Zur Ermittlung der Seitenreferenzgeschwindigkeit wird die in die Schaltung 8 bzw. 9 ausgewählte Radgeschwindigkeit über eine Filterstufe 10 bzw. 11 geführt, die im vorliegenden Ausführungsbeispiel als Tiefpass erster Ordnung ausgebildet ist. Die Filterzeitkonstante (T) der beiden Filterstufen 10,11 ist veränderbar und wird, wie der Schaltkreis 12 symbolisiert, dem aktuellen Reibbeiwert, der mit Hilfe der Auswerteschaltung 7 ermittelt wird, angepaßt. Wird von der Schaltung 7 Hochreibwert signalisiert, etwa bei einem Reibbeiwert > 0,6, ist die Zeitkonstante gerade so groß, daß die relativ schnellen Änderungen oder Schwingungen der Radgeschwindigkeit, die üblicherweise vorhanden sind und auf die die Regelung nicht reagieren soll, eliminiert werden. Mit abnehmendem Reibbeiwert wird die Filterzeitkonstante mit Hilfe des Schaltkreises 12 erhöht, da länger dauernde Regelzyklen auftreten. Die Filterzeitkonstante wird zweckmäßigerweise bei Niedrigreibwert auf das 4- bis 10fache im Vergleich zur Zeitkonstante bei Hochreibwert erhöht. In einem Ausführungsbeispiel verhält sich die Filterzeitkonstante T bei Hochreibwert zur Zeitkonstanten bei mittlerem Reibwert und zur Zeitkonstanten bei Niedrigreibwert (» < 0,1) wie 1: 2: 4:.

In einem Ausführungsbeispiel der Erfindung sind die Filterstufen 10,11 so ausgelegt, daß die Filterzeitkonstante bei abnehmendem Radgeschwindigkeitssignal wirksam ist, während die ansteigenden Geschwindigkeitssignale von den Filterstufen nicht beeinflußt werden; steigt die führende Radgeschwindigkeit über die bisherige Ausgangsgröße der Filterstufen 10,11 an, wird sofort die höhere Geschwindigkeit zur Seitenreferenzgeschwindigkeit.

Die Ausgangssignale der Filterstufen 10,11 stellen die Seitenreferenzgeschwindigkeiten SRG - links (SRG_{L}) bzw. SRG - rechts (SRG_{R}) dar; dies symbolisieren die Stufen 13 und 14. Anschließend wird die Differenz DVS beider Geschwindigkeitssignale in eine Stufe 15 gebildet. Das Ausgangssignal dieser Stufe ist zusätzlich abhängig von dem Einfluß eines zuschaltbaren Gegenkopplungskreises 16, der ebenfalls an die Auswerteschaltung 7 angeschlossen ist. Bei "normalem", für eine Regelbremsung typischem Raddrehverhalten ist die Rückkopplung relativ hoch und damit der Einfluß des Differenzsignals auf die Regelung gering. Bei indifferentem, atypischem Raddrehverhalten, das z. B. durch Störungen, stark wechselndem Reibwert und anderen kritischen Situationen verursacht sein kann, wird dagegen die Rückkopplung relativ gering und dadurch der Einfluß des durch die Kurvenfahrt hervorgerufenen Differenzsignales DVS verhältnismäßig hoch. Der Gegenkopplungsgrad kann sich in mehrere Stufen oder kontinuierlich ändern, so daß auch die Beeinflussung bzw. die Verschiebung der Regelungsschwellen je nach Größe der Störung oder der Abweichung vom "normalen" Verhalten unterschiedlich hoch ist.

Das Differenzsignal DVS, nämlich das Ausgangssignal der Stufe 15 wird in einer Divisionsstufe 17 durch die Fahrzeugreferenzgeschwindigkeit V_{REF} dividiert, bevor es zu einer Anpassungsschaltung 18, in der die Beeinflussung der Regelung stattfindet, weitergeleitet wird. Der Einfluß des Differenzsignales auf die Regelung ist somit abhängig von der Fahrzeuggeschwindigkeit bzw. Fahrzeugreferenzgeschwindigkeit.

Das Ausgangssignal der Anpassungsschaltung 18 führt zu der Auswerteschaltung 7. Über diesem Weg werden in einem Ausführungsbeispiel der Erfindung in Abhängigkeit von dem Eingangssignal der Schaltung 18 und damit in Abhängigkeit von dem Differenzsignal DVS und dem Maß der Gegenkopplung Regelungsschwellen angehoben oder abgesenkt. Beispielsweise läßt sich durch Verschieben der Schlupfschwellen die Empfindlichkeit der Regelung variieren. Durch Verschieben der Verzögerungs- und/oder Beschleunigungsschwellen, die den Zeitpunkt des Druckabbaues und Druckaufbaues während einer Regelung bestimmen, wird ebenfalls die Empfindlichkeit der Regelung beeinflußt. Ein rechtzeitiges Abschalten einer sogenannten Giermomentenbegrenzung oder Reduzierung der entsprechenden Schaltschwelle kann z. B. bei einer Kurvenfahrt wichtig sein, um sicherzustellen, daß das oder die Fahrzeugräder, die relativ hohen Straßenkontakt besitzen, genügend Bremsdruck erhalten. Im Prinzip läßt sich mit der Anpassungsschaltung 18 jede Regelgröße beeinflußen, die die Regelung in der gewünschten Weise an die besonderen Bedingungen einer Kurvenfahrt anpassen kann.

Die Arbeitsweise der erfindungsgemäßen Anordnung geht aus der vorstehenden Beschreibung der einzelnen Schaltkreise und ihre Zusammenschaltung hervor. Solange das Fahrzeug geradeaus fährt oder nur geringfügig von der Geraden abweicht, sind die Seitenreferenzgeschwindigkeiten nahezu gleich. Die Anpassungsschaltung 18 übt keinen Einfluß auf die Regelschwellen des Blockierschutz- oder Antriebsschlupfregelsystems aus.

Bei einer Kurvenfahrt führen die unterschiedlichen Wege der kurveninneren und kurvenäußeren Fahrzeugräder zu voneinander abweichenden Seitenreferenzgeschwindigkeiten SRG_{L}, SRG_{R} und damit zu einem Differenzsignal am Ausgang der Stufe 15. Bei typischen, "normalen" Regelvorgängen wird allerdings die Gegenkopplung durch den Kreis 16 hoch und damit das Ausgangssignal der Stufe 15 relativ klein. Die Beeinflussung der Regelungsschwellen durch die Anpassungsschaltung 18 wirkt in diesem Falle gering, wobei noch die Fahrzeugreferenzgeschwindigkeit eine Rolle spielt, weil das Ausgangssignal der Stufe 15 in dem Schaltkreis 17 durch die Fahrzeugreferenzgeschwindigkeit dividiert wird, gegebenenfalls unter Berücksichtigung eines konstanten Faktors.

Die Tiefpass-Filter 10,11 verhindern, daß relativ schnelle, durch Störungen, Schwingungen, Bodenwellen und dgl. ausgelöste Geschwindigkeitsänderungen weitergeleitet werden. Bei hohem Reibwert ist die Zeitkonstante T (12) relativ klein, bei Niedrigreibwert dagegen hoch, weil die einzelnen Regelungsvorgänge, z. B. der Druckabbau, bei Niedrigreibwert relativ lang werden.

Die zuschaltbare Gegenkopplung durch den Schaltkreis 16 bewirkt, daß bei atypischem, kritischem Regelungsverhalten in der Kurve die Ausgangssignale der Stufen 15 und 17 hoch werden. Dies hat zur Folge, daß die Regelungsschwellen angehoben und dadurch die Regelung unempfindlicher wird. Beispielsweise kann der Radschlupf höher werden als bei normalem Regelverhalten, bevor die Regelung einsetzt. Andererseits kann eine höhere Regelungsempfindlichkeit für den Normalfall und Geradausfahrt gewählt werden, weil durch die erfindungsgemäße Schaltungsanordnung die Kurvenerkennung und Anpassung der Schaltschwellen an das Verhalten des Fahrzeuges in einer Kurve sichergestellt ist.

Die "Kurven-Erkennung" kann auch - wie bereits angedeutet - dazu verwendet werden, die Reaktion der Regelung auf Giermomente zu verändern. Maßnahmen zur Giermomenten-Unterdrückung sind nämlich bei einer Geradeausfahrt sehr hilfreich, während einer Kurvenfahrt jedoch gegebenenfalls nachteilig. Daher ist es von Nutzen, wenn mit dem erfindungsgemäß gewonnenen Kurvenerkennungssignal diese sogenannte Giermomenten-Abschwächung außer Funktion gesetzt wird bzw. wenn die Schwellen zur Abschaltung der Giermomenten-Begrenzung gesenkt werden. Es sind natürlich noch weitere Regelungsänderungen denkbar, die zu einer Verbesserung des Fahrzeugverhaltens während einer Kurvenfahrt führen und daher durch das Ausgangssignal der erfindungsgemäßen Schaltung herbeigeführt werden sollten.

## Patentansprüche

1. Schaltungsanordnung für eine Bremsanlage mit Blockierschutz- und/oder Antriebsschlupfregelung, mit Radsensoren (1 - 4) zur Erzeugung von elektrischen Signalen, die das Raddrehverhalten wiedergeben, mit Schaltkreisen zur Bildung einer Fahrzeugreferenzgeschwindigkeit (6), zur Auswahl von Sensorsignalen (8,9), zur Kurvenerkennung (18) und zur Erzeugung von Bremsdrucksteuersignalen, wobei in einem ersten Schritt das Drehverhalten der Räder jeder Fahrzeugseite separat ermittelt wird und in einem zweiten Schritt die seitenbezogenen Meßwerte verglichen werden, dadurch **gekennzeichnet,** daß diese Auswahlschaltkreise (8,9) besitzt, mit denen in dem ersten Schritt durch Vergleich und Bewertung der Radgeschwindigkeiten für jede Fahrzeugseite eine Seitenreferenzgeschwindigkeit (SRG_{L},SRG_{R}) gebildet wird und mit denen zur Bildung der Seitenreferenzgeschwindigkeiten (SRG_{L},SRG_{R}) nach vorgegebenen Auswahl- und Bewertungskriterien jeweils die führende Radgeschwindigkeit abgeleitet wird, wobei außerhalb der Regelung, d.h. solange keine Regelung stattfindet, grundsätzlich das langsamere, während der Regelung grundsätzlich das schnellere Fahrzeugrad als führendes Rad zur Bildung der Seitenreferenzgeschwindigkeit (SRG_{L},SRG_{R}) dient, und daß in dem zweiten Schritt aus beiden Seitenreferenzgeschwindigkeiten (SRG_{L},SRG_{R}) ein Differenzsignal (DVS) generiert wird, welches nach Verknüpfung mit der Fahrzeugreferenzgeschwindigkeit (V_{REF}) zur Kurvenerkennung und/oder zur Anpassung der Regelung an das Fahrzeugverhalten während einer Kurvenfahrt, d.h. an die Radbelastungsänderungen, den Lenkwinkel und dgl., ausgewertet wird.

2. Schaltungsanordnung nach Anspruch 1, dadurch **gekennzeichnet,** daß Tiefpaß-Filterstufen (10,11,12) mit veränderlicher Filterzeitkonstanten (T) vorhanden sind und daß die führende Radgeschwindigkeit jeweils eine der Tiefpaß-Filterstufen (10,11) zugeführt wird, wobei die Filterzeitkonstante (T) vom momentanen Reibwert bzw. Reibbeiwert oder einer entsprechenden Meßgröße derart abhängig ist, daß mit abnehmendem Reibwert die Filterzeitkonstante (T) kontinuierlich oder in Stufen zunimmt.

3. Schaltungsanordnung nach Anspruch 2, dadurch **gekennzeichnet,** daß diese einen Schaltkreis (12) besitzt, mit dem die Filterzeitkonstante (T) bei Niedrigreibwert bezogen auf die Filterzeitkonstante bei Hochreibwert um das 3- bis 10fache erhöht wird.

4. Schaltungsanordnung nach Anspruch 2 oder 3, dadurch **gekennzeichnet,** daß sich die Filterzeitkonstante (T) bei Hochreibwert zur Zeitkonstanten bei mittlerem Reibwert und zur Zeitkonstanten bei Niedrigreibwert etwa wie 1: 2: 4 verhält.

5. Schaltungsanordnung nach einem oder mehreren der Ansprüche 1 bis 4, dadurch **gekennzeichnet,** daß das aus beiden Seitenreferenzgeschwindigkeiten (SRG_{L},SRG_{R}) gebildete Differenzsignal (DVS) durch einen zuschaltbaren Gegenkopplungskreis (16) modifiziert wird, der bei normalem, typischen Raddrehverhalten während einer Regelbremsung eingeschaltet ist und dadurch das Differenzsignal reduziert und der bei indifferentem, atypischem Raddrehverhalten abgeschaltet wird oder das Differenzsignal (DVS) nur geringfügig beeinflußt.

6. Schaltungsanordnung nach einem oder mehreren der Ansprüche 1 bis 5, dadurch **gekennzeichnet,** daß zur Anpassung der Regelung ein Stellsignal durch Division (Divisionsstufe 17) des Differenzsignals (DVS) durch die Fahrzeugreferenzgeschwindigkeit (V_{REF}) abgeleitet und einer Anpassungsschaltung (18) zugeführt wird, die eine oder mehrere Regelungsschwellen kontinuierlich oder in Stufen proportional zu oder in Abhängigkeit von der Größe des Stellsignals erhöht bzw. die Empfindlichkeit der Regelung verringert.

7. Schaltungsanordnung nach Anspruch 6, dadurch **gekennzeichnet,** daß in Abhängigkeit von dem Stellsignal die Schlupfschwellen der Regelung und/oder die Verzögerungs- und/oder Beschleunigungsschwellen und/oder Abschaltschwellen für eine Giermomentenbegrenzung oder dgl. verändert werden.

8. Schaltungsanordnung nach Anspruch 1, dadurch **gekennzeichnet,** daß während einer Regelung die Führung der Seitenreferenzgeschwindigkeit (SRG_{L},SRG_{R}) auf das langsamere Rad übergeht, sobald die Geschwindigkeit des führenden Rades über die Fahrzeugreferenzgeschwindigkeit (V_{REF}) hinaus ansteigt.

9. Schaltungsanordnung nach Anspruch 8, dadurch **gekennzeichnet,** daß die Filterzeitkonstanten der Tiefpaß-Filterstufen (10,11) auf Geschwindigkeitssignale, die eine Abnahme der führenden Radgeschwindigkeiten wiedergeben, reagieren, dagegen von Geschwindigkeitssignalen, die eine Zunahme der Radgeschwindigkeit wiedergeben, nicht beeinflußt werden.

## Claims

1. A circuit configuration for a brake system with anti-lock control and/or traction slip control, comprising wheel sensors (1 to 4) for generating electric signals representing the wheel rotational behaviour, comprising circuits for forming a vehicle reference speed (6), for selecting sensor signals (8, 9), for the cornering identification (18) and for generating braking pressure control signals, wherein the rotational behaviour of the wheels of each vehicle side is determined separately in a first step, and the side-related measured values are compared in a second step,
**characterized** in that it is provided with selection circuits (8, 9), by which, in the first step, a lateral reference speed (SRG_{L}, SRG_{R}) is formed for each vehicle side by comparing and evaluating the wheel speeds, and by which in each case the leading wheel speed is derived for forming the lateral reference speeds (SRG_{L}, SRG_{R}) according to predetermined selection and evaluation criteria, in which case out of the control, that means as long as a control action is not performed, principally the slower vehicle wheel and during the control principally the faster vehicle wheel serves as the leading wheel for forming the lateral reference speed (SRG_{L}, SRG_{R}), and in that in the second step a difference signal (DVS) is generated from both, lateral reference speeds (SRG_{L}, SRG_{R}) which, after being combined with the vehicle reference speed (V_{REF}), is evaluated for identifying cornering and/or for adapting the control to the vehicle behaviour during cornering, that means to the variations of wheel load, the steering angle and the like.

2. A circuit configuration as claimed in claim 1,
**characterized** in that low-path filter means (10, 11, 12) with variable filter time constants (T) are provided, and in that the leading wheel speed is in each case supplied to one of the low-pass filter means (10, 11), the filter time constant (T) being a function of the instantaneous friction value or coefficient of friction, respectively, or a corresponding measured variable in such a manner that, with decreasing friction value, the filter time constant (T) increases continuously or in steps.

3. A circuit configuration as claimed in claim 2,
**characterized** in that it comprises a circuit (12) permitting to increase the filter time constant (T) in the presence of a low coefficient of friction three to ten times the amount relative to the filter time constant for a high coefficient of friction.

4. A circuit configuration as claimed in claim 2 or 3,
**characterized** in that the filter time constant (T) which applies for a high coefficient of friction is approximately on the order of a ratio of 1:2:4 in relation to the time constant for a medium coefficient of friction and in relation to the time constant for a low coefficient of friction.

5. A circuit configuration as claimed in any one or more of the claims 1 to 4,
**characterized** in that the difference signal (DVS) formed of both lateral reference speeds (SRG_{L}, SRG_{R}) is modified by a connectable inverse feedback circuit (16) which is activated in the presence of a normal, typical wheel rotational behaviour during an anti-lock braking operation and thereby reduces the difference signal and which is deactivated or influences the difference signal (DVS) only slightly when indifferent, atypical wheel rotational behaviour occurs.

6. A circuit configuration as claimed in any one or more of the claims 1 to 5,
**characterized** in that, for adapting the control, a corrective signal is derived by dividing (divider 17) the difference signal (DVS) by the vehicle reference speed (V_{REF}) and is supplied to an adaptation circuit (18) which raises one or more control thresholds continuously or in steps proportionally to, or as a function of, the magnitude of the corrective signal or, respectively, reduces the sensitivity of the control.

7. A circuit configuration as claimed in claim 6,
**characterized** in that the slip thresholds of the control and/or the deceleration thresholds and/or acceleration thresholds and/or switch-off thresholds for yawing torque limitation or the like are variable in response to the corrective signal.

8. A circuit configuration as claimed in claim 1,
**characterized** in that, during a control action, the dominant influence of the lateral reference speed (SRG_{L}, SRG_{R}) will pass to the slower wheel as soon as the speed of the leading wheel rises in excess of the vehicle reference speed (V_{REF}).

9. A circuit configuration as claimed in claim 8,
**characterized** in that the filter time constants of the low-pass filter means (10, 11) react to speed signals representing a decrease of the leading wheel speeds, while they are not influenced by speed signals representing an increase of the wheel speed.

## Revendications

1. Montage pour une installation de freinage comportant un système de régulation d'antiblocage et/ou de glissement d'entraînement, comportant des capteurs de roues (1-4) servant à produire des signaux électriques, qui reproduisent le comportent de rotation des roues, des circuits servant à former une vitesse de référence (6) du véhicule, à sélectionner des signaux (8, 9) des capteurs, à identifier (18) une courbe et à produire des signaux de commande de la pression de freinage, et dans lequel lors d'une première étape, le comportement de rotation des roues de chaque côté du véhicule est déterminé séparément et, lors d'une seconde étape, les valeurs de mesure rapportées aux côtés sont comparées, caractérisé en ce que ce montage possède des circuits de sélection (8, 9), à l'aide desquels, lors de la première étape, une vitesse de référence de côté (SRG_{L}, SRG_{R}) est formée par comparaison et évaluation des vitesses de roue pour chaque côté du véhicule et à l'aide desquelles respectivement la vitesse de roue pilote est obtenue pour la formation des vitesses de référence de côté (SRG_{L}, SRG_{R}) selon des critères prédéterminés de sélection et d'évaluation, auquel cas en dehors de la régulation, c'est-à-dire tant qu'aucune régulation n'intervient, en principe la roue la plus lente du véhicule et, pendant la régulation, la roue la plus rapide du véhicule est utilisée comme roue pilote pour la formation de la vitesse de référence de côté (SRG_{L}, SRG_{R}), et que lors de la seconde étape, à partir des deux vitesses de référence de côté (SRG_{L}, SRG_{R}) est formé un signal de différence (DVS), qui, après combinaison, avec la vitesse de référence (V_{REF}) du véhicule, est évalué pour l'identification de la courbe et/ou l'adaptation de la régulation au comportement du véhicule pendant le franchissement d'une courbe, c'est-à-dire aux variations de la charge de roue, à l'angle de braquage et analogue.

2. Montage selon la revendication 1, caractérisé en ce qu'il est prévu des étages de filtre passe-bas (10, 11) ayant des constantes de temps variables (T) et que la vitesse de roue pilote est envoyée respectivement à l'un des étages de filtre passe-bas (10, 11), la constante de temps (T) du filtre dépendant du frottement ou du facteur de correction de frottement instantané ou d'une grandeur de mesure correspondante de telle manière que lorsque le frottement diminue, la constante de temps (T) du filtre augmente continûment ou par échelons.

3. Montage selon la revendication 2, caractérisé en ce que ce montage comporte un circuit (12) au moyen duquel la constante de temps (T) du filtre pour une valeur de frottement faible est accrue du facteur 3 à 10 par rapport à la constante de temps du filtre pour une valeur de frottement élevée.

4. Montage selon la revendication 2 ou 3, caractérisé en ce que la constante de temps (T) du filtre pour une valeur de frottement élevée se comporte par rapport à la constante de temps dans le cas d'une valeur de frottement moyenne et par rapport à la constante de temps dans le cas d'une valeur de frottement faible approximativement dans le rapport à 1:2:4.

5. Montage selon une ou plusieurs des revendications 1 à 4, caractérisé en ce que le signal de différence (DVS) formé à partir des deux vitesses de référence de côté (SRG_{L}, SRG_{R}) est modifié par un circuit de contre-réaction (7) pouvant être branché en supplément et qui, dans le cas d'un comportement normal typique de rotation des roues est activé pendant un freinage de régulation et, de ce fait, réduit le signal de différence et qui est désactivé dans le cas d'un comportement atypique indifférent de rotation des roues ou influe seulement faiblement sur le signal de différence (DVS).

6. Montage selon une ou plusieurs des revendications 1 à 5, caractérisé en ce que pour l'adaptation de la régulation, un signal de régulation est obtenu par division (étage diviseur 17) du signal de différence (DVS) par la vitesse de référence (V_{REF}) du véhicule et est envoyé à un circuit d'adaptation (18), qui augmente un ou plusieurs seuils de régulation d'une manière continue ou par échelons proportionnellement à ou en fonction de la grandeur du signal de régulation ou réduit la sensibilité de la régulation.

7. Montage selon la revendication 6, caractérisé en ce que les seuils de glissement de la régulation et/ou les seuils de décélération et/ou d'accélération et/ou les seuils de débranchement sont modifiés pour une limitation du moment de lacet ou analogue en fonction du signal de régulation.

8. Montage selon la revendication 1, caractérisé en ce que pendant la régulation, le pilotage de la vitesse de référence de côté (SRG_{L}, SRG_{R}) passe à la roue la plus lente dès que la vitesse de la roue pilote dépasse la vitesse de référence (V_{REF}) du véhicule.

9. Montage selon la revendication 8, caractérisé en ce que les constantes de temps des étages de filtre passe-bas (10, 11) réagissent à des signaux de vitesse, qui reproduisent une diminution des vitesses de roue pilotes, alors qu'elles ne sont pas soumises à l'influence de signaux de vitesse, qui reproduisent un accroissement de la vitesse de roue.
